# FASCICULE DE BREVET EUROPEEN

(11) **EP 2 640 913 B1**
(45) Date de publication et mention de la délivrance du brevet: **04.01.2017**
(21) Numéro de dépôt: 11796741.4
(22) Date de dépôt: 10.11.2011
(51) Int. Cl.: E04H 15/32, E04H 15/64, F16G 11/00, E04H 15/40, E04H 15/42, F16G 11/14, F16B 45/00

(54) **CONTENEUR, NOTAMMENT DE TYPE TENTE OU ABRI, A DOUBLE ENVELOPPES SOUPLES RELIÉES PAR UN DISPOSITIF DE LIAISON, ET DISPOSITIF DE LIAISON CORRESPONDANT**
BEHÄLTER, INSBESONDERE IN FORM EINES ZELTES ODER UNTERSTANDES, MIT ZWEI FLEXIBLEN, DURCH EINE VERBINDUNGSVORRICHTUNG VERBUNDENE ABDECKUNGEN UND ENTSPRECHENDE VERBINDUNGSVORRICHTUNG
CONTAINER, IN PARTICULAR OF THE TENT OF SHELTER TYPE, COMPRISING TWO FLEXIBLE COVERS INTERCONNECTED BY A LINKING DEVICE, AND CORRESPONDING LINKING DEVICE

(30) Priorité: 18.11.2010 FR 1059470
(43) Date de publication de la demande: 25.09.2013
(73) Titulaire: Decathlon, 59650 Villeneuve D'ascq (FR)
(72) Inventeur: AUFFRET, Antoine, 74190 Passy (FR); CHIFFOLEAU, Vincent, 85150 La Mothe Achard (FR)
(74) Mandataire: Balesta, Pierre
(86) Numéro de dépôt international: PCT/FR2011/052626
(87) Numéro de publication internationale: WO 2012/066220

(56) Documents cités:
- FR-A- 988 252
- FR-A1- 2 877 966
- FR-A1- 2 886 962
- US-A- 6 145 527

## Description

La présente invention concerne le domaine des conteneurs à double enveloppes souples reliées entre elles par un dispositif de liaison. Cette invention trouve notamment son application aux conteneurs de type tente ou abri.

Généralement de tels conteneurs présentent une première enveloppe souple destinée à former le volume intérieur du conteneur, et une deuxième enveloppe souple, espacée de la première, destinée à former le volume extérieur du conteneur.

Ces deux enveloppes, par exemple formée d'un ou plusieurs panneaux textiles, sont espacées l'une de l'autre, mais reliées entre elles par un dispositif de liaison.

Cette configuration à double enveloppe souple présente notamment l'intérêt de limiter la condensation et l'humidité dans le volume intérieur. On rencontre en particulier une telle configuration dans le domaine des tentes dites à double toit. Dans ce cas, la première enveloppe souple est généralement appelée chambre intérieure, et la deuxième enveloppe souple est généralement appelée toile de toit.

Généralement, la mise en volume de ces conteneurs est obtenue par l'intermédiaire d'une structure porteuse comprenant une ou plusieurs tiges rigides ou semi-rigides de laquelle ou desquelles les deux enveloppes souples sont solidaires. Cette structure porteuse peut par exemple être une structure simple comme c'est le cas de la tente décrite dans le document FR 988 252, ou une structure en
arceaux, comme c'est le cas par exemple de la tente décrite dans le document FR 2 877 966.

Un tel conteneur est généralement repliable, depuis une configuration déployée d'utilisation, dans laquelle le conteneur est mis en volume, vers une configuration repliée de rangement, dans laquelle le conteneur présente un encombrement minimal et se présente par exemple sous la forme d'un disque sensiblement plat.

Une structure en arceaux adaptée à ce type de conteneur comprend généralement des éléments flexibles pouvant être constitués de tiges flexibles à retour élastique, notamment formées de joncs en matière composite ou métallique ou plastique, ces tiges étant éventuellement connectées les unes aux autres.

Il existe un certain nombre de cas dans lesquels de tels conteneurs sont pourvus d'un élément longiligne, qui peut prendre la forme d'une simple corde, permettant d'assurer une ou plusieurs fonctions différentes.

Une telle corde peut par exemple servir classiquement de moyen de mise en tension de la structure porteuse et/ou des enveloppes souples, ou encore de moyen de stabilisation, que l'on vient généralement fixer au sol par une extrémité.

En fonction de l'endroit en lequel cette corde est fixée au conteneur, sa mise en tension peut engendrer des difficultés, par exemple en raison du frottement avec l'une des enveloppes souples.

Par ailleurs, le repliage du conteneur peut être gêné par la présence de cette corde. Il en va de même lors du montage du conteneur.

Ceci est d'autant plus vrai dans le cas particulier d'un conteneur auto-déployable, par exemple une tente auto-déployable.

Classiquement, une tente auto-déployable est une tente qui ne nécessite aucune manipulation pour obtenir sa mise en volume à partir de la configuration repliée, à l'exception éventuellement du retrait d'une sangle de maintien en configuration repliée. Un tel auto-déploiement peut classiquement être obtenu par l'utilisation d'une structure en arceaux telle que présentée plus haut, par exemple avec des tiges flexibles à retour élastique montées contraintes par les enveloppes souples en position courbées, et qui tendent à revenir à une position rectiligne ce qui assure la mise en volume.

Dans un tel cas, il est très important que la corde mentionnée plus haut ne nuise pas à l'auto-déploiement, par exemple en s'enroulant autour de l'une des tiges, ce qui pourrait bloquer la mise en volume.

Une telle corde peut également servir de moyen d'assistance au repliage, notamment dans le cas d'un conteneur qui prend la forme d'une tente à structure en arceaux. De tels moyens d'assistance au repliage sont par exemple décrits dans la demande de brevet FR 10 57223 non encore publiée à la date de dépôt de la présente demande.

Là encore, pour les mêmes raisons que celles présentées ci-dessus dans le cas d'une corde de mise en tension ou de stabilisation, il est important que le montage, en particulier dans le cas d'un auto-déploiement, et le repliage, ne soient pas pertubés par la présence de cette corde.

Une telle corde peut également servir de moyen d'actionnement d'un panneau de recouvrement destiné à fermer une ouverture dans une tente, tel que cela est décrit dans le document FR 2 886 962.

On retrouve ainsi dans cet autre cas d'utilisation d'un élément longiligne, tel qu'une corde, associé à un conteneur, tel qu'une tente, les mêmes problèmes à résoudre pour éviter que la présence de la corde ne vienne perturber le montage, notamment en cas d'auto-déploiement, ou le repliage.

Par ailleurs, on observe également qu'un tel élément longiligne a tendance à s'user rapidement en raison notamment des frottements avec les enveloppes souples. A l'inverse, ces frottements peuvent endommager les enveloppes souples elles-mêmes.

En outre, notamment en raison de ces frottements, l'utilisateur qui utilise l'élément longiligne pour assurer la fonction prévue, par exemple l'assistance au repliage, a tendance à utiliser une force importante pour actionner l'élément longiligne. Or, si l'effort nécessaire de la part de l'utilisateur est important, ceci devient contraire à l'objectif recherché d'assistance au repliage. D'autre part, la force importante mise en jeu génère encore plus de frottements.

L'invention a donc pour objet de résoudre les problèmes précités liés à l'utilisation d'un élément longiligne dans un conteneur destiné à contenir ou abriter des objets ou des personnes, tel qu'une tente, parmi d'autres problèmes.

Le but visé par la présente invention est ainsi de proposer un conteneur à double enveloppes souples, notamment du type tente ou abri, dans lequel l'élément longiligne est guidé avec un minimum de frottements, en particulier au niveau des enveloppes souples, et qui nécessite une force peu importante pour sa mise en oeuvre.

L'invention se rapporte ainsi, selon un premier aspect, à un conteneur destiné à contenir ou à abriter des objets ou des personnes, notamment de type tente, comprenant une structure support solidaire d'une part d'une première enveloppe souple formant le volume intérieur du conteneur, et d'autre part d'une deuxième enveloppe souple espacée de la première enveloppe souple et formant le volume extérieur du conteneur.

Les première et deuxième enveloppes sont reliées par un dispositif de liaison.

Ce dispositif de liaison comprend un premier et un deuxième moyens de liaison respectivement solidaires de la première et de la deuxième enveloppes souples, ainsi qu'un moyen de guidage solidaire des premier et deuxième moyens de liaison.

Ce moyen de guidage est destiné à guider un élément longiligne, tel qu'une corde, sans interaction entre l'élément longiligne et les premier et deuxième moyens de liaison, et sans interaction entre l'élément longiligne et, au moins au niveau du dispositif de liaison, les première et deuxième enveloppes souples, de manière à permettre une libre circulation de l'élément longiligne par rapport aux moyens de liaison et aux première et deuxième enveloppes souples.

Par interaction, on entend notamment le contact. Ainsi, dans le conteneur de l'invention, le dispositif de liaison permet à la fois la liaison entre les deux enveloppes souples, et le guidage de l'élément longiligne entre ces deux enveloppes souples, sans contact, donc sans frottement, entre l'élément longiligne et d'une part les premier et deuxième moyens de liaison, et d'autre part les deux enveloppes souples, au moins au niveau, ou à proximité, du dispositif de liaison.

Dans une première variante de réalisation, les premier et deuxième moyens de liaison ne sont pas directement solidaires l'un de l'autre, le moyen de guidage étant interposé entre les premier et deuxième moyens de liaison.

Alternativement, les premier et deuxième moyens de liaison sont à la fois directement solidaires l'un de l'autre et solidaires du moyen de guidage.

Dans une deuxième variante de réalisation, éventuellement en combinaison avec la précédente, le dispositif de liaison est rigide.

Dans une troisième variante de réalisation, éventuellement en combinaison avec l'une des deux premières, ou les deux, les premier et deuxième moyens de liaison comprennent chacun un orifice apte à permettre le passage d'un élément de liaison, par exemple de type patte textile, permettant la liaison respectivement avec la première et la deuxième enveloppes souples.

Dans une quatrième variante de réalisation, éventuellement en combinaison avec une ou plusieurs quelconques des précédentes, le moyen de guidage comprend un orifice apte à permettre le passage d'un élément longiligne.

Dans cette variante, le moyen de guidage peut être pourvu d'une poulie montée sur un axe fixé par ses deux extrémités en deux bords de l'orifice dans ce moyen de guidage.

Dans le cas où les premier et deuxième moyens de liaison présentent chacun un orifice, l'axe de la poulie n'est pas parallèle à un axe passant par le centre des ces deux orifices. De préférence, cet axe est sensiblement perpendiculaire à l'axe passant par le centre de ces deux orifices.

L'orifice formé dans le moyen de guidage peut présenter une forme sensiblement allongée, avec une première extrémité à bord arrondi et une extrémité opposée à bord rectiligne.

Dans une autre variante de réalisation, en combinaison avec les deux précédentes, les premier et deuxième moyens de liaison et le moyen de guidage comprennent chacun un anneau, de préférence circulaire.

Alternativement, le dispositif de liaison comprend un élément sensiblement plat dans lequel sont percés les orifices des premier et deuxième moyens de liaison et du moyen de guidage.

Dans une autre variante de réalisation, éventuellement en combinaison avec une ou plusieurs quelconques des précédentes, le conteneur comprend un élément longiligne, de préférence souple ou semi-rigide, guidé par le moyen de guidage et solidaire du conteneur par une de ses extrémités.

Cet élément longiligne peut constituer tout ou partie d'un moyen d'actionnement d'un panneau de recouvrement d'une ouverture dans le conteneur.

Alternativement, le conteneur étant repliable, l'élément longiligne peut constituer tout ou partie d'un moyen d'assistance au repliage.

Ce moyen d'assistance au repliage est de préférence du type apte à permettre de ramener un point source de la structure support sur un point cible de cette structure support.

La structure support est de préférence de type structure en arceaux flexibles, formant au moins une boucle. Le moyen d'assistance au repliage est alors apte à permettre de ramener un point source de la structure support sur un point cible de cette structure support, en sorte de former avec cette structure support deux sous-boucles.

Dans encore une autre variante de réalisation, éventuellement en combinaison avec une ou plusieurs quelconques des précédentes, le conteneur est déployable, de préférence auto-déployable, depuis une première position dans laquelle il se présente dans une configuration formant un disque sensiblement plat, vers une deuxième position dans laquelle il est apte à contenir ou abriter des personnes ou des objets.

Dans encore une autre variante de réalisation, éventuellement en combinaison avec une ou plusieurs quelconques des précédentes, le conteneur est de type tente ou abri.

L'invention se rapporte également, selon un deuxième aspect, à un dispositif de liaison destiné à permettre la liaison entre une première et une deuxième enveloppes souples espacées l'une de l'autre et solidaires d'une structure support, les première et deuxième enveloppes souples formant respectivement les volumes intérieur et extérieur d'un conteneur destiné à contenir ou à abriter des objets ou des personnes, notamment de type tente.

Le dispositif de liaison comprend un premier et un deuxième moyens de liaison respectivement destinés à être solidarisés avec la première et la deuxième enveloppe souple, et un moyen de guidage solidaire des premier et deuxième moyens de liaison.

Ce moyen de guidage est destiné à guider un élément longiligne, tel qu'une corde, sans interaction entre l'élément longiligne et les premier et deuxième moyens de liaison, et sans interaction entre l'élément longiligne et, au moins au niveau du dispositif de liaison, les première et deuxième enveloppes souples, de manière à permettre une libre circulation de l'élément longiligne par rapport aux moyens de liaison et aux première et deuxième enveloppes souples.

Dans une première variante de réalisation, les premier et deuxième moyens de liaison ne sont pas directement solidaires l'un de l'autre, le moyen de guidage étant interposé entre les premier et deuxième moyens de liaison.

Alternativement, les premier et deuxième moyens de liaison sont à la fois directement solidaires l'un de l'autre et solidaires du moyen de guidage.

Dans une deuxième variante, éventuellement en combinaison avec la première, le dispositif de liaison est rigide.

Dans une troisième variante, éventuellement en combinaison avec l'une des deux premières, ou les deux, les premier et deuxième moyens de liaison comprennent chacun un orifice apte à permettre le passage d'un élément de liaison, par exemple de type patte textile, permettant la liaison respectivement avec une première et une deuxième enveloppes souples.

Dans une quatrième variante, éventuellement en combinaison avec une ou plusieurs des précédentes, le moyen de guidage comprend un orifice apte à permettre le passage d'un élément longiligne.

Dans cette variante, le moyen de guidage peut être pourvu d'une poulie montée sur un axe fixé par ses deux extrémités en deux bords de l'orifice dans ce moyen de guidage.

Dans le cas ou les premier et deuxième moyens de liaison présentent chacun un orifice, l'axe de la poulie n'est pas parallèle à un axe passant par le centre de ces deux orifices. De préférence, cet axe est sensiblement perpendiculaire à l'axe passant par le centre de ces deux orifices.

L'orifice formé dans le moyen de guidage peut présenter une forme sensiblement allongée, avec une première extrémité à bord arrondi et une extrémité opposée à bord rectiligne.

Dans encore une autre variante, en combinaison avec les deux précédentes, les premier et deuxième moyens de liaison et le moyen de guidage comprennent chacun un anneau, de préférence circulaire.

Alternativement, le dispositif de liaison comprend un élément sensiblement plat dans lequel sont percés les orifices des premier et deuxième moyens de liaison et du moyen de guidage.

D'autres caractéristiques et avantages de l'invention apparaîtront plus clairement et de manière complète à la lecture de la description ci-après des variantes préférées de réalisation, lesquelles sont données à titre d'exemples non limitatifs et en référence aux dessins annexés suivants :
- figure 1 : représente schématiquement un exemple de conteneur selon l'invention,
- figures 2a, 2b, 2c, 2d : représentent schématiquement quatre exemples de dispositif de liaison selon l'invention,
- figures 3 : représente schématiquement et dans une vue de détail un cinquième exemple de dispositif de liaison selon l'invention, en position dans un conteneur selon l'invention tel que celui de la figure 1,
- figure 4 : représente schématiquement un sixième exemple de dispositif de liaison selon l'invention.

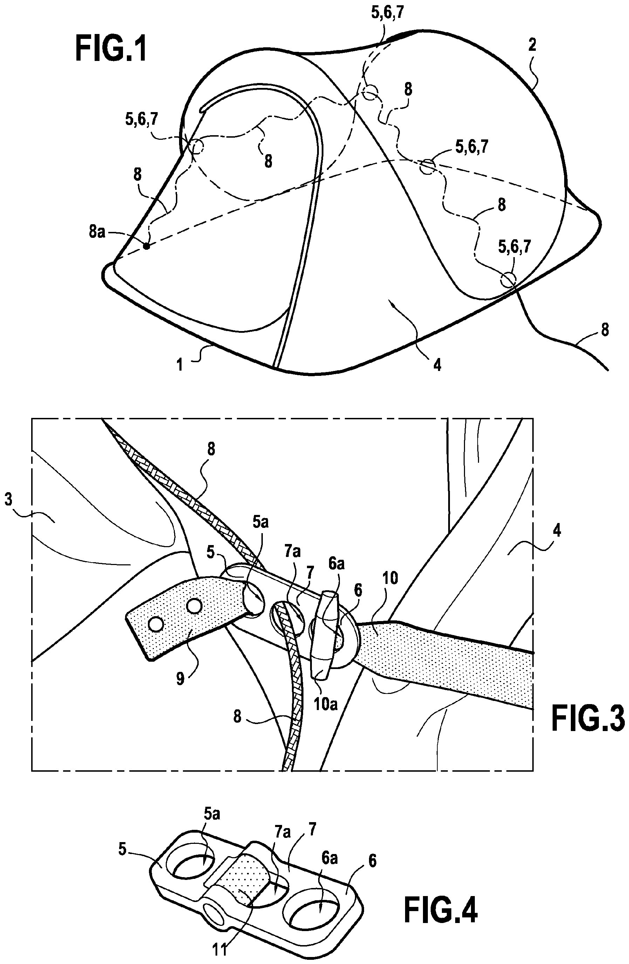

La figure 1 représente schématiquement un conteneur de type tente à structure en arceaux, qui peut éventuellement être auto-déployable.

Cette tente présente donc une structure support 1,2 qui est une structure en arceaux 1, 2 comprenant une boucle d'embase 1 surmontée d'une boucle supérieure 2.

Chaque boucle 1, 2 peut être constituée d'un unique arceau, la structure en arceaux comprenant alors deux arceaux distincts. Alternativement, un seul arceau conformé de façon appropriée peut constituer à la fois la boucle d'embase 1 et la boucle supérieure 2. Dans encore un autre cas, la structure en arceaux peut comprendre deux arceaux distincts, chaque boucle 1, 2 étant constituée d'une portion d'un des arceaux et d'une portion de l'autre arceau.

Ces boucles 1, 2 présentent une forme qui peut être strictement circulaire, mais qui est le plus souvent sensiblement oblongue, tel qu'effectivement représenté à la figure 1 pour la boucle supérieure 2, ou qui présente des portions rectilignes avec des coins arrondis, tel qu'effectivement représenté à la figure 1 pour la boucle inférieure 1.

Par ailleurs, la tente comprend une première enveloppe souple formant le volume intérieur de la tente lorsque celle-ci est déployée, et une deuxième enveloppe souple 4 formant le volume extérieur de la tente lorsque celle-ci est déployée.

Par souci de clarté, la première enveloppe souple masquée par la deuxième enveloppe souple 4 n'a pas été représentée sur la figure 1, mais est représentée sur la figure 3 qui sera décrite plus loin.

Ces première et deuxième 4 enveloppes souples peuvent être formées par un ou plusieurs panneaux textiles, solidaires de la structure en arceaux comprenant la boucle d'embase 1 et la boucle supérieure 2, par exemple par l'intermédiaire de fourreaux textiles cousus sur les enveloppes souples et dans lesquels sont glissées les boucles d'embase 1 et supérieure 2.

Dans l'exemple représenté à la figure 1, la tente est pourvue de dispositifs de liaison 5, 6, 7 disposés en plusieurs endroits, entre la première enveloppe souple et la deuxième enveloppe souple 4.

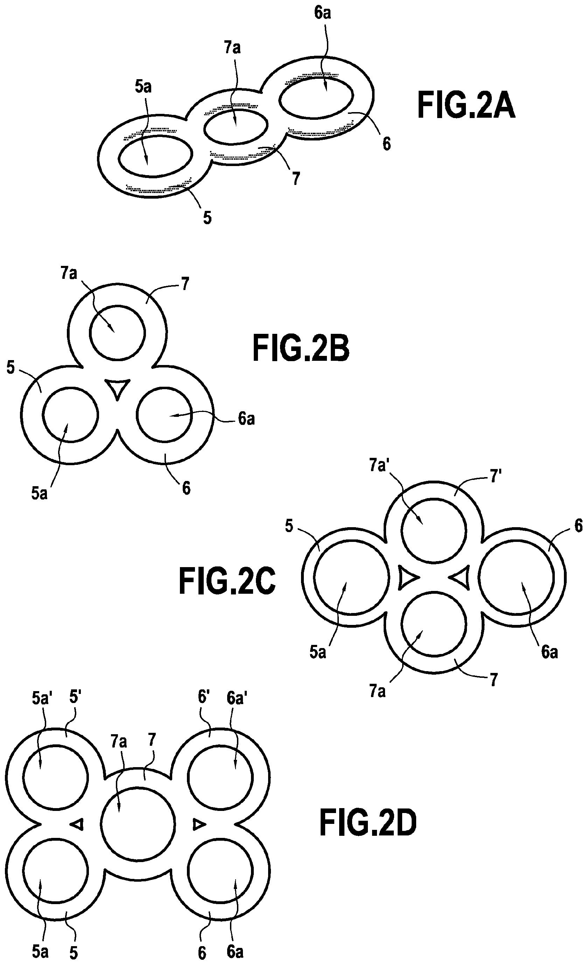

Des exemples de tels dispositifs de liaison 5, 6, 7 sont représentés plus en détail aux figures 2a, 2b, 2c, 2d et 3 décrites plus loin.

Ces dispositifs de liaison 5, 6, 7 permettent non seulement d'assurer la liaison entre la première enveloppe souple et la deuxième enveloppe souple 4, mais également de guider un élément longiligne, dont la fonction peut varier.

Dans l'exemple représenté à la figure 1, la tente est pourvue d'un élément longiligne 8 qui constitue un moyen d'assistance au repliage, du type de ceux décrits dans la demande de brevet FR 10 57223 non encore publiée à la date de dépôt de la présente demande.

Cet élément longiligne 8 prend la forme d'une corde 8 fixée en l'une de ses extrémités 8a au conteneur, en un endroit déterminé, sur l'une ou l'autre des première et deuxième enveloppes souples, au niveau d'une des boucles de la structure en arceaux 1, 2, voire directement sur ladite boucle.

En l'espèce, la corde 8 est fixée par son extrémité 8a au niveau de la boucle d'embase 1.

L'extrémité opposée de la corde 8 dépasse à l'extérieur de la tente, de sorte que l'utilisateur peut s'en saisir et tirer afin de mettre en oeuvre un procédé de repliage déterminé, consistant notamment à ramener les deux boucles d'embase 1 et supérieure 2 l'une sur l'autre pour qu'elle forment une unique boucle virtuelle, et à ramener un point source de cette boucle virtuelle vers un point cible de cette boucle virtuelle, tout en vrillant ladite boucle virtuelle, pour former deux sous-boucles éventuellement superposées à partir de la boucle virtuelle.

Ainsi, l'élément longiligne 8 « serpente » entre la première enveloppe souple et la deuxième enveloppe souple 4, et est guidé en différents endroits par des moyens de guidage formant partie des dispositifs de liaison 5, 6, 7 entre la première et la deuxième enveloppes souples.

La figure 2a représente schématiquement un exemple de dispositif de liaison selon l'invention, tel qu'il peut équiper le conteneur représenté à la figure 1.

Ce dispositif de liaison est de préférence rigide, par exemple en plastique ou en métal, et comprend un premier moyen de liaison 5, un deuxième moyen de liaison 6, et un moyen de guidage 7.

Dans cet exemple, le premier moyen de liaison 5 et le deuxième moyen de liaison 6 ne sont pas directement solidaires l'un de l'autre, mais sont séparés par le moyen de guidage 7 qui s'interpose entre les deux.

Le premier et le deuxième moyens de liaison 5, 6 comprennent chacun un orifice 5a, 6a qui, comme on le verra plus précisément en référence à la figure 3, permet la liaison respectivement avec la première et la deuxième enveloppes souples, par exemple par le biais d'un élément de liaison qui passe dans l'orifice 5a, 6a.

Par ailleurs, le moyen de guidage 7 comprend lui aussi un orifice 7a qui permet le passage d'un élément longiligne tel que la corde 8 présentée plus haut en référence à la figure 1. L'orifice 7a de l'élément de guidage 7 présente un diamètre sensiblement supérieur à celui de l'élément longiligne 8, pour en assurer le mouvement relatif par rapport à l'élément de guidage 7. En outre, l'élément longiligne 8 est monté coulissant dans l'élément de guidage 7, afin de permettre à l'élément longiligne de remplir les fonctions détaillées précédemment de manière non limitative, telles que la mise en tension de la structure porteuse et / ou des enveloppes souples, ou le repliage du conteneur. Le passage de l'élément longiligne 8 dans l'élément de guidage 7 est permis quelle que soit la configuration de la tente, pliée ou dépliée. Dans cet exemple représenté à la figure 2a, le dispositif de liaison prend la forme de trois anneaux adjacents 5, 6, 7, ou d'un « triple huit » formant les trois anneaux adjacents 5, 6, 7.

Alternativement, les trois anneaux 5, 6, 7 pourraient être adjacents deux à deux, en sorte de former non plus un « triple huit » mais une sorte de trèfle.

Plus généralement, les premier et deuxième moyens de liaison 5, 6 peuvent être à la fois directement solidaires l'un de l'autre et solidaires du moyen de guidage 7.

C'est ce qui est représenté à la figure 2b, avec un deuxième exemple de dispositif de liaison selon l'invention dans lequel les trois moyens 5, 6 et 7 ne sont plus sensiblement alignés, le moyen de guidage 7 étant décentré par rapport aux premier et deuxième moyens de liaison 5 et 6.

Si l'on souhaite assurer le guidage de plus d'un élément longiligne, de façon distincte, on peut prévoir plusieurs moyens de guidage 7 disposés entre le premier et le deuxième moyens de liaison 5, 6.

C'est ce qui est représenté à la figure 2c, avec un troisième exemple de dispositif de liaison selon l'invention dans lequel sont prévus deux moyens de guidage distincts 7 et 7', chacun présentant un orifice 7a et 7a' permettant le passage de deux éléments longilignes distincts, entre les premier et deuxième moyens de liaison 5 et 6.

De même, il est possible de prévoir plusieurs premiers moyens de liaison 5 pour assurer la liaison en plusieurs endroits de la première enveloppe souple ou en différents endroits d'autres composants du conteneur, et/ou plusieurs deuxièmes moyens de liaison 6 pour assurer la liaison en plusieurs endroits de la deuxième enveloppe souple ou en différents endroits d'autres composants du conteneur.

C'est ce qui est représenté à la figure 2d, avec un quatrième exemple de dispositif de liaison selon l'invention dans lequel sont prévus deux premiers moyens de liaison distincts 5 et 5', chacun présentant un orifice 5a et 5a', et deux deuxièmes moyens de liaison distincts 6 et 6', chacun présentant un orifice 6a et 6a', de part et d'autre du moyen de guidage 7.

A la figure 3 est représenté une portion du conteneur selon l'invention, tel que présenté plus haut dans un exemple en référence à la figure 1, à un endroit en lequel est disposé un dispositif de liaison selon l'invention dans un cinquième exemple de réalisation dudit dispositif de liaison.

Ainsi, le dispositif de liaison 5, 6, 7, qui prend ici la forme d'un élément sensiblement plat, de préférence en matériau rigide tel que du plastique ou du métal, est disposé entre la première enveloppe souple 3 et la deuxième enveloppe souple 4, dans l'espace séparant ces deux enveloppes souples 3, 4, et assure ainsi la liaison entre ces deux enveloppes souples 3, 4.

Pour ce faire, des éléments de liaison 9 et 10 sont utilisés, par exemple des pattes textiles souples 9 et 10 fixées par exemple par couture par une première de leurs extrémités, respectivement en la première et la deuxième enveloppes souples 3, 4.

Ainsi, la patte textile 9 forme une boucle qui passe dans l'orifice 5a formé dans le premier moyen de liaison 5 constituant la partie la plus à gauche du dispositif de liaison 5, 6, 7, et la deuxième extrémité de cette patte textile 9 est fixée par exemple par couture sur la patte textile elle-même, à proximité de sa première extrémité, et/ou sur la première enveloppe souple 3.

La boucle fermée 9, formée par la patte textile 9, garantit donc la solidarisation du premier moyen de liaison 5 avec la première enveloppe souple 3.

De même, la patte textile 10 passe dans l'orifice 6a formé dans le deuxième moyen de liaison 6 constituant la partie la plus à droite du dispositif de liaison 5, 6,7.

Cette patte textile 10 est pourvue en son extrémité libre d'un téton 10a qui, une fois passé à travers l'orifice 6a du deuxième moyen de liaison, vient empêcher la patte textile 10 de ressortir de l'orifice 6a, ce qui garantit la solidarisation du deuxième moyen de liaison 6 avec la deuxième enveloppe souple 4.

Par ailleurs, entre le premier et le deuxième moyens de liaison 5, 6, et leurs orifices respectifs 5a, 6a, dans la portion centrale du dispositif de liaison 5, 6, 7, est disposé le moyen de guidage 7, avec son orifice 7a permettant le passage d'un élément longiligne 8.

Dans le sixième exemple de réalisation représenté à la figure 4, le dispositif de liaison est similaire à celui décrit en référence à la figure 3, avec un certain nombre de variations décrites ci-après.

Comme dans le précédent exemple, ce dispositif de liaison 5, 6, 7, qui prend la forme d'un élément sensiblement plat, est de préférence en matériau rigide tel que du plastique ou du métal.

On retrouve donc, entre le premier et le deuxième moyens de liaison 5, 6, et leurs orifices respectifs 5a, 6a, dans la portion centrale du dispositif de liaison 5, 6, 7, le moyen de guidage 7, avec son orifice 7a permettant le passage d'un élément longiligne 8.

A la différence de l'exemple précédent, le moyen de guidage 7 est ici pourvu d'une poulie 11 montée sur un axe fixé en deux bords opposés de l'orifice 7a.

Le dispositif de liaison est par exemple réalisé par moulage d'un matériau plastique. La poulie 11 et son axe peuvent également être en matériau plastique, l'axe étant par exemple serti en ses deux extrémités dans des logements formés à cet effet dans les bords de l'orifice 7a.

L'axe de la poulie 11 s'étend de préférence perpendiculairement à un axe passant par le centre des orifices 5a, 6a formés respectivement dans les premier et deuxième moyens de liaison 5, 6. Cet axe de la poulie 11 n'est en tout cas pas parallèle à l'axe passant par le centre des orifices 5a, 6a.

La présence de la poulie 11 permet notamment de contrôler le coulissement de l'élément longiligne 8 représenté à la figure 3.

Dans l'exemple représenté à la figure 4, l'orifice 7a présente une forme sensiblement allongée avec une première extrémité à bord arrondi d'un premier côté de la poulie 11 par rapport à l'axe de cette poulie 11, et une deuxième extrémité à bord rectiligne d'un deuxième côté de la poulie 11 par rapport à l'axe de cette poulie 11.

La présente description est donnée à titre illustratif, les exemples présentés ci-dessus n'étant pas limitatifs de l'invention.

En particulier, outre le fait que le l'invention s'étend à des conteneurs autres que des tentes, l'objet de l'invention ne se limite pas à un conteneur pourvu d'un dispositif de liaison 5, 6, 7 présentant une fonction déterminée tel que le dispositif de liaison apte à guider un élément longiligne 8 qui serait un moyen d'assistance au repliage du conteneur.

Ainsi, l'invention s'étend à tout conteneur équipé d'un dispositif de liaison destiné notamment à guider un élément longiligne quelle que soit sa fonction, tel qu'un moyen d'actionnement d'un panneau de recouvrement d'une ouverture, un moyen de mise en tension et/ou de stabilisation, etc...

Par ailleurs, l'invention ne se limite pas à un dispositif de liaison présentant l'une des formes spécifiques décrites plus haut en référence aux figures 2a, 2b, 2c, 2d et 3, mais s'étend à tout dispositif de liaison permettant à la fois la liaison avec les première et deuxième enveloppes souples par l'intermédiaire respectivement d'un premier et d'un deuxième moyens de liaison, et le guidage d'un élément longiligne sans interaction entre cet élément longiligne et les premier et deuxième moyens de liaison, ni entre cet élément longiligne et les première et deuxième enveloppes souples au moins au niveau, ou à proximité, du dispositif de liaison.

On précisera en particulier que les contours des anneaux tels que représentés aux figures 2a à 2d ne sont pas nécessairement circulaires, que les contours des orifices, dans ces anneaux tout comme dans le dispositif de liaison représenté aux figures 3 et 4, ne sont pas non plus nécessairement circulaires, et que le contour du dispositif de liaison lui-même tel que représenté aux figures 3 et 4 peut varier.

Egalement, les diamètres des orifices tels que représentés aux figures 2a à 2d, 3 et 4, et les diamètres externes des anneaux tels que représentés aux figures 2a à 2d, ou plus généralement leurs dimensions en cas d'orifices ou d'anneaux non circulaires, ne sont pas nécessairement identiques.

## Revendications

1. Conteneur destiné à contenir ou à abriter des objets ou des personnes, notamment de type tente, comprenant une structure support (1, 2) solidaire d'une part d'une première enveloppe souple (3) formant le volume intérieur du conteneur, et d'autre part d'une deuxième enveloppe souple (4) espacée de la première enveloppe souple (3) et formant le volume extérieur du conteneur, les première et deuxième enveloppes (3, 4) étant reliées par un dispositif de liaison (5, 6, 7), le dispositif de liaison comprenant un premier (5) et un deuxième (6) moyens de liaison respectivement solidaires de la première (3) et de la deuxième (4) enveloppes souples, **caractérisé en ce que** le dispositif de liaison comprend un moyen de guidage (7) solidaire des premier et deuxième moyens de liaison (5, 6), le conteneur comportant en outre un élément longiligne (8), de préférence souple ou semi-rigide, guidé par le moyen de guidage (7) et solidaire du conteneur par une de ses extrémités (8a), l'élément longiligne (8) étant guidé sans interaction avec les premier et deuxième moyens de liaison (5, 6), et sans interaction, au moins au niveau du dispositif de liaison (5, 6, 7), avec les première et deuxième enveloppes souples (3, 4), de manière à permettre une libre circulation de l'élément longiligne par rapport aux moyens de liaison et aux première et deuxième enveloppes souples.

2. Conteneur selon la revendication **1**, **caractérisé en ce que** le dispositif de liaison (5, 6, 7) est rigide.

3. Conteneur selon la revendication **1** ou **2**, **caractérisé en ce que** les premier et deuxième moyens de liaison (5, 6) comprennent chacun un orifice (5a, 6a) apte à permettre le passage d'un élément de liaison (9, 10), par exemple de type patte textile (9, 10), permettant la liaison respectivement avec la première et la deuxième enveloppes souples (3, 4), et **en ce que** le moyen de guidage (7) comprend un orifice (7a) apte à permettre le passage dudit élément longiligne (8).

4. Conteneur selon la revendication **3**, **caractérisé en ce que** le moyen de guidage (7) comprend une poulie (11) montée sur un axe fixé par ses deux extrémités en deux bords de l'orifice (7a) dans ledit moyen de guidage (7).

5. Conteneur selon la revendication **4**, **caractérisé en ce que** l'axe de la poulie (11) n'est pas parallèle, ce dit axe étant de préférence sensiblement perpendiculaire, à un axe passant par le centre des deux orifices (5a, 6a) formés respectivement dans les premier et deuxième moyens de liaison (5, 6).

6. Conteneur selon l'une quelconque des revendications **3 à 5**, **caractérisé en ce que** les premier et deuxième moyens de liaison (5, 6) et le moyen de guidage (7) comprennent chacun un anneau (5, 6, 7), de préférence circulaire.

7. Conteneur selon l'une quelconque des revendications **3 à 5**, **caractérisé en ce que** le dispositif de liaison (5, 6, 7) comprend un élément sensiblement plat dans lequel sont percés les orifices (5a, 6a) des premier et deuxième moyens de liaison (5, 6) et du moyen de guidage (7).

8. Conteneur selon l'une quelconque des revendications **1 à 7**, **caractérisé en ce qu'**il est repliable, l'élément longiligne (8) constituant tout ou partie d'un moyen d'assistance au repliage.

9. Conteneur selon la revendication **8**, **caractérisé en ce que** la structure support (1, 2) est de type structure en arceaux flexibles, formant au moins une boucle (1, 2) et **en ce que** le moyen d'assistance au repliage est apte à permettre de ramener un point source de la structure support (1, 2) sur un point cible de cette structure support (1, 2), en sorte de former avec cette structure support (1, 2) deux sous-boucles.

10. Kit comprenant un dispositif de liaison (5, 6, 7) destiné à permettre la liaison entre une première et une deuxième enveloppes souples (3, 4) espacées l'une de l'autre et solidaires d'une structure support (1, 2), les première et deuxième enveloppes souples (3, 4) formant respectivement les volumes intérieur et extérieur d'un conteneur destiné à contenir ou à abriter des objets ou des personnes, notamment de type tente, le dispositif de liaison (5, 6, 7) comprenant un premier (5) et un deuxième (6) moyens de liaison respectivement destinés à être solidarisés avec la première (3) et la deuxième (4) enveloppes souples, **caractérisé en ce que** le dispositif de liaison (5, 6, 7) comprend un moyen de
guidage (7) solidaire des premier et deuxième moyens de liaison (5, 6), le kit comprenant en outre un élément longiligne (8), tel qu'une corde (8), configuré pour être solidarisé au conteneur par une de ses extrémités (8a) et pour être guidé par le moyen de guidage (7) sans interaction avec les premier et deuxième moyens de liaison (5, 6), et sans interaction, au moins au niveau du dispositif de liaison (5, 6, 7), avec les première et deuxième enveloppes souples (3, 4), de manière à permettre une libre circulation de l'élément longiligne par rapport aux moyens de liaison et aux première et deuxième enveloppes souples.

11. Kit selon la revendication **10**, **caractérisé en ce que** le dispositif de liaison (5, 6, 7) est rigide.

12. Kit selon la revendication **10** ou **11**, **caractérisé en ce que** les premier et deuxième moyens de liaison (5, 6) comprennent chacun un orifice (5a, 6a) apte à permettre le passage d'un élément de liaison (9, 10), par exemple de type patte textile (9, 10), permettant la liaison respectivement avec une première et une deuxième enveloppes souples (3, 4), et **en ce que** le moyen de guidage (7) comprend un orifice (7a) apte à permettre le passage dudit élément longiligne (8).

13. Kit selon la revendication **12**, **caractérisé en ce que** le moyen de guidage (7) comprend une poulie (11) montée sur un axe fixé par ses deux extrémités en deux bords de l'orifice (7a) dans ledit moyen de guidage (7).

14. Kit selon la revendication **13**, **caractérisé en ce que** l'axe de la poulie (11) n'est pas parallèle, ce dit axe étant de préférence sensiblement perpendiculaire, à un axe passant par le centre des deux orifices (5a, 6a) formés respectivement dans les premier et deuxième moyens de liaison (5, 6).

15. Kit selon l'une quelconque des revendications **12 à 14**, **caractérisé en ce que** les premier et deuxième moyens de liaison (5, 6) et le moyen de guidage (7) comprennent chacun un anneau (5, 6, 7), de préférence circulaire.

16. Kit selon l'une quelconque des revendications **12 à 14, caractérisé en ce que** le dispositif de liaison (5, 6, 7) comprend un élément sensiblement plat dans lequel sont percés les orifices (5a, 6a) des premier et deuxième moyens de liaison (5, 6) et du moyen de guidage (7).

## Patentansprüche

1. Behälter, der dazu bestimmt ist, Gegenstände oder Personen unterzubringen, insbesondere in Form eines Zeltes, der eine Trägerstruktur (1, 2) aufweist, die einerseits mit einer ersten flexiblen Abdeckung (3), die das Innenvolumen des Behälters bildet, und andererseits mit einer zweiten flexiblen Abdeckung (4) fest verbunden ist, die von der ersten flexiblen Abdeckung (3) beabstandet ist und das Außenvolumen des Behälters bildet, wobei die erste und zweite Abdeckung (3, 4) durch eine Verbindungsvorrichtung (5, 6, 7) verbunden sind, wobei die Verbindungsvorrichtung ein erstes (5) und ein zweites (6) Verbindungsmittel aufweist, die jeweils mit der ersten (3) und der zweiten (4) flexiblen Abdeckung fest verbunden sind, **dadurch gekennzeichnet, dass** die Verbindungsvorrichtung ein Führungsmittel (7) aufweist, das mit dem ersten und zweiten Verbindungsmittel (5, 6) fest verbunden ist, wobei der Behälter ferner ein vorzugsweise flexibles oder halbstarres, langgestrecktes Element (8) aufweist, das von dem Führungsmittel (7) geführt wird und mit dem Behälter durch eines seiner Enden (8a) fest verbunden ist, wobei das langgestreckte Element (8) ohne Interaktion mit dem ersten und zweiten Verbindungsmittel (5, 6) und ohne Interaktion mindestens an der Verbindungsvorrichtung (5, 6, 7) mit der ersten und zweiten flexiblen Abdeckung (3, 4) derart geführt wird, um einen freien Umlauf des langgestreckten Elements relativ zu den Verbindungsmitteln und der ersten und zweiten flexiblen Abdeckung zu ermöglichen.

2. Behälter nach Anspruch 1, **dadurch gekennzeichnet, dass** die Verbindungsvorrichtung (5, 6, 7) starr ist.

3. Behälter nach Anspruch 1 oder 2, **dadurch gekennzeichnet, dass** das erste und zweite Verbindungsmittel (5, 6) jeweils eine Öffnung (5a, 6a) aufweisen, die geeignet ist, den Durchgang eines Verbindungselements (9, 10), beispielsweise des Typs der Textillasche (9, 10), zu ermöglichen, das die Verbindung jeweils mit der ersten und der zweiten flexiblen Abdeckung (3, 4) ermöglicht, und dass das Führungsmittel (7) eine Öffnung (7a) aufweist, die geeignet ist, den Durchgang des langgestreckten Elements (8) zu ermöglichen.

4. Behälter nach Anspruch 3, **dadurch gekennzeichnet, dass** das Führungsmittel (7) eine Rolle (11) aufweist, die auf einer festen Achse durch ihre zwei Enden an zwei Rändern der Öffnung (7a) in dem Führungsmittel (7) befestigt ist.

5. Behälter nach Anspruch 4, **dadurch gekennzeichnet, dass** die Achse der Rolle (11) nicht parallel ist, wobei diese Achse vorzugsweise im Wesentlichen senkrecht zu einer Achse ist, die durch die Mitte der zwei Öffnungen (5a, 6a) verläuft, die jeweils in dem ersten und zweiten Verbindungsmittel (5, 6) gebildet sind.

6. Behälter nach einem der Ansprüche 3 bis 5, **dadurch gekennzeichnet, dass** das erste und zweite Verbindungsmittel (5, 6) und das Führungsmittel (7) jeweils einen vorzugsweise kreisförmigen Ring (5, 6, 7) aufweisen.

7. Behälter nach einem der Ansprüche 3 bis 5, **dadurch gekennzeichnet, dass** die Verbindungsvorrichtung (5, 6, 7) ein im Wesentlichen flaches Element aufweist, in dem die Öffnungen (5a, 6a) des ersten und zweiten Verbindungsmittels (5, 6) und des Führungsmittels (7) gebohrt sind.

8. Behälter nach einem der Ansprüche 1 bis 7, **dadurch gekennzeichnet, dass** er gefaltet werden kann, wobei das langgestreckte Element (8) die Gesamtheit oder einen Teil eines Hilfsmittels zum Zusammenfalten bildet.

9. Behälter nach Anspruch 8, **dadurch gekennzeichnet, dass** die Trägerstruktur (1, 2) vom Typ der Struktur aus flexible Bögen ist, die mindestens eine Schlaufe (1, 2) bildet, und dass das Hilfsmittel zum Zusammenfalten geeignet ist, zu ermöglichen, einen Quellpunkt der Trägerstruktur (1, 2) auf einen Zielpunkt dieser Trägerstruktur (1, 2) derart zurückzubringen, um mit dieser Trägerstruktur (1, 2) zwei Unterschlaufen zu bilden.

10. Set, umfassend eine Verbindungsvorrichtung (5, 6, 7), die dazu bestimmt ist, die Verbindung zwischen einer ersten und der zweiten flexiblen Abdeckung (3, 4), die voneinander beabstandet sind und mit einer Trägerstruktur (1, 2) fest verbunden sind, zu ermöglichen, wobei die erste und zweite flexible Abdeckung (3, 4) jeweils das Innen- und Außenvolumen eines Behälters, der dazu bestimmt ist, Gegenstände oder Personen zu enthalten oder unterzubringen, insbesondere in Form eines Zeltes, bilden, wobei die Verbindungsvorrichtung (5, 6, 7) ein erstes (5) und ein zweites (6) Verbindungsmittel aufweist, die jeweils dazu bestimmt sind, mit der ersten (3) und der zweiten (4) flexiblen Abdeckung fest verbunden zu werden, **dadurch gekennzeichnet, dass** die Verbindungsvorrichtung (5, 6, 7) ein Führungsmittel (7) aufweist, das mit dem ersten und zweiten Verbindungsmittel (5, 6) fest verbunden ist, wobei das Set ferner ein langgestrecktes Element (8) aufweist, wie beispielsweise ein Seil (8), das konfiguriert ist, um mit dem Behälter durch eines seiner Enden (8a) fest verbunden zu werden und um von dem Führungsmittel (7) ohne Interaktion mit dem ersten und zweiten Verbindungsmittel (5, 6) und ohne Interaktion mindestens auf Ebene der Verbindungsvorrichtung (5, 6, 7) mit der ersten und zweiten flexiblen Abdeckung (3, 4) derart geführt zu werden, um einen freien Umlauf des langgestreckten Elements relativ zu den Verbindungsmitteln und der ersten und zweiten flexiblen Abdeckung zu ermöglichen.

11. Set nach Anspruch 10, **dadurch gekennzeichnet, dass** die Verbindungsvorrichtung (5, 6, 7) starr ist.

12. Set nach Anspruch 10 oder 11, **dadurch gekennzeichnet, dass** das erste und zweite Verbindungsmittel (5, 6) jeweils eine Öffnung (5a, 6a) aufweisen, die geeignet ist, den Durchgang eines Verbindungselements (9, 10), beispielsweise des Typs der Textillasche (9, 10), zu ermöglichen, das die Verbindung jeweils mit einer ersten und einer zweiten flexiblen Abdeckung (3, 4) ermöglicht, und dass das Führungsmittel (7) eine Öffnung (7a) aufweist, die geeignet ist, den Durchgang des langgestreckten Elements (8) zu ermöglichen.

13. Set nach Anspruch 12, **dadurch gekennzeichnet, dass** das Führungsmittel (7) eine Rolle (11) aufweist, die auf einer festen Achse durch ihre zwei Enden an zwei Rändern der Öffnung (7a) in dem Führungsmittel (7) befestigt ist.

14. Set nach Anspruch 13, **dadurch gekennzeichnet, dass** die Achse der Rolle (11) nicht parallel ist, wobei diese Achse vorzugsweise im Wesentlichen senkrecht zu einer Achse ist, die durch die Mitte der zwei Öffnungen (5a, 6a) verläuft, die jeweils in dem ersten und zweiten Verbindungsmittel (5, 6) gebildet sind.

15. Set nach einem der Ansprüche 12 bis 14, **dadurch gekennzeichnet, dass** das erste und zweite Verbindungsmittel (5, 6) und das Führungsmittel (7) jeweils einen vorzugsweise kreisförmigen Ring (5, 6, 7) aufweisen.

16. Set nach einem der Ansprüche 12 bis 14, **dadurch gekennzeichnet, dass** die Verbindungsvorrichtung (5, 6, 7) ein im Wesentlichen flaches Element aufweist, in dem die Öffnungen (5a, 6a) des ersten und zweiten Verbindungsmittels (5, 6) und des Führungsmittels (7) gebohrt sind.

## Claims

1. A container designed to contain or to shelter articles or people, in particular a container of the tent type, comprising a support structure (1, 2) secured firstly to a first flexible sheet (3) defining the volume inside the container, and secondly to a second flexible sheet (4) spaced apart from the first flexible sheet (3) and defining the volume outside the container, the first and second sheets (3, 4) being interconnected via a link device (5, 6, 7),
said link device comprising a first link means (5) and a second link means (6) that are respectively secured to the first flexible sheet (3) and to the second flexible sheet (4), **characterized in that** the link device comprises a guide means (7) secured to the first and second link means (5, 6), the container further comprising an elongate element (8), preferably flexible or semi-rigid, guided by the guide means (7) and that is secured to the container via one of its ends (8a), the elongate element (8) being guided without any interaction with the first and second link means (5, 6), and without any interaction, at least at the link device (5, 6, 7), with the first and second flexible sheets (3, 4) in such a manner as to enable the elongate element to pass freely relative to the link means and to the first and second flexible sheets.

2. A container according to claim 1, **characterized in that** the link device (5, 6, 7) is rigid.

3. A container according to claim 1 or 2, **characterized in that** each of the first and second link means (5, 6) includes an orifice (5a, 6a) suitable for enabling a link element (9, 10), e.g. of the textile tab (9, 10) type, to pass through it, making it possible to provide linking with a respective one of the first and second flexible sheets (3, 4), and **in that** the guide means (7) includes an orifice (7a) suitable for enabling an elongate element (8) to pass through it.

4. A container according to claim 3, **characterized in that** the guide means (7) comprises a pulley (11) mounted on a pin fastened by its two ends to two edges of the orifice (7a) in said guide means (7).

5. A container according to claim 4, **characterized in that** the pin of the pulley (11) is not parallel to but rather is preferably substantially perpendicular to the axis passing through the centers of both orifices (5a, 6a) formed respectively in the first and second link means (5, 6).

6. A container according to any one of claims 3 to 5, **characterized in that** the first and second link means (5, 6) and the guide means (7) each comprise a preferably circular ring (5, 6, 7).

7. A container according to any one of claims 3 to 5, **characterized in that** the link device (5, 6, 7) comprises a substantially flat element in which the orifices (5a, 6a) of the first and second link means (5, 6) and of the guide means (7) are provided.

8. A container according to any one of claims 1 to 7, **characterized in that** it is foldable, and **in that** the elongate element (8) constitutes all or some part of folding-assistance means.

9. A container according to claim 8, **characterized in that** the support structure (1, 2) is of the flexible-hoops structure type, forming at least one loop (1, 2), and **in that** the folding-assistance means is suitable for making it possible to bring a source point of the support structure (1, 2) onto a target point of said support structure (1, 2), so as to co-operate with said support structure (1, 2) to form two sub-loops.

10. Kit comprising a link device (5, 6, 7) designed to provide linking between first and second flexible sheets (3, 4) spaced apart from each other and secured to a support structure (1, 2), the first and second flexible sheets (3, 4) respectively forming the inner and the outside volumes of a container designed to contain or to shelter articles or people, in particular a container of the tent type,
the link device (5, 6, 7) comprising a first link means (5) and a second link means (6) that are respectively designed to be secured to the first flexible sheet (3) and to the second flexible sheet (4), **characterized in that** the link device (5, 6, 7) comprises a guide means (7) secured to the first and second link means (5, 6), the kit further comprising an elongate element (8), such as a cord (8), configured to be secured to the container via one of its ends (8a) and to be guided by the guide means (7) without any interaction with the first and second link means (5, 6), and without any interaction, at least at the link device (5, 6, 7), with the first and second flexible sheets (3, 4) in such a manner as to enable the elongate element to pass freely relative to the link means and to the first and second flexible sheets.

11. A kit according to claim 10, **characterized in that** the link device (5, 6, 7) is rigid.

12. A kit according to claim 10 or 11, **characterized in that** each of the first and second link means (5, 6) includes an orifice (5a, 6a) suitable for enabling a link element (9, 10), e.g. of the textile tab (9, 10) type, to pass through it, making it possible to provide linking with a respective one of the first and second flexible sheets (3, 4), and **in that** the guide means (7) includes an orifice (7a) suitable for enabling said elongate element (8) to pass through it.

13. A kit according to claim 12, **characterized in that** the guide means (7) comprises a pulley (11) mounted on a pin fastened by its two ends to two edges of the orifice (7a) in said guide means (7).

14. A kit according to claim 13, **characterized in that** the pin of the pulley (11) is not parallel to but rather is preferably substantially perpendicular to the axis passing through the centers of both orifices (5a, 6a) formed respectively in the first and second link means (5, 6).

15. A kit according to any one of claims 12 to 14, **characterized in that** the first and second link means (5, 6) and the guide means (7) each comprise a preferably circular ring (5, 6, 7).

16. A kit according to any one of claims 12 to 14, **characterized in that** the link device (5, 6, 7) comprises a substantially flat element in which the orifices (5a, 6a) of the first and second link means (5, 6) and of the guide means (7) are provided.
